Europäisches Patentamt

European Patent Office

Office européen des brevets

(11) Veröffentlichungsnummer: **0 359 840**

**A1**

(12) **EUROPÄISCHE PATENTANMELDUNG**

(21) Anmeldenummer: **88115291.2**

(22) Anmeldetag: **17.09.88**

(51) Int. Cl.5: **G01G 19/16 , G01G 19/10 , G01G 5/04 , E02F 9/26**

(43) Veröffentlichungstag der Anmeldung:
**28.03.90 Patentblatt 90/13**

(84) Benannte Vertragsstaaten:
**DE FR GB NL**

(71) Anmelder: **Kirchberger, Franz**
**Lichtenfelser Strasse 43**
**D-8623 Staffelstein(DE)**

(72) Erfinder: **Kirchberger, Franz**
**Lichtenfelser Strasse 43**
**D-8623 Staffelstein(DE)**

(74) Vertreter: **LOUIS, PÖHLAU, LOHRENTZ &**
**SEGETH**
**Kesslerplatz 1 Postfach 3055**
**D-8500 Nürnberg-1(DE)**

(54) **Verfahren zur Bestimmung der Anhängelast bei einer landwirtschaftlichen Maschine.**

(57) Es wird ein Verfahren und eine Vorrichtung zur Bestimmung des Gewichtes einer Anhängelast bei einer landwirtschaftlichen Maschine (10) beschrieben, wobei der Anhängelast der auf einen Kolben (26) einer Kolben-Zylindereinrichtung (24) einwirkende Druck eines Strömungsmittels aus einer Druckquelle (30) entgegenwirkt. Dabei wird die Anhängelast in eine erste obere Endstellung (48) bewegt, anschliessend wird die Strömungsmittelverbindung zwischen der Druckquelle (30) und der Kolben-Zylindereinrichtung (24) unterbrochen und gleichzeitig eine eine Drosseleinrichtung (36) und einen Sammelbehälter (38) für das Strömungsmittel aufweisende zweite Rohrleitung geöffnet. Infolge der Gravitation bewegt sich in diesem Zustand die Anhängelast von der Endstellung (48) zur Endstellung (50). Während dieser Absenkbewegung wird die Zeitdauer (t) gemessen, die zwischen zwei vorbestimmten, voneinander beabstandeten Stellungen (66, 68) der Anhängelast vergeht. Aus der gemessenen Zeitdauer (t) wird das zu dieser Zeitdauer (t) umgekehrt proportionale Gewicht (G) der Anhängelast bestimmt und mittels einer Anzeigeeinrichtung (64) angezeigt.

FIG.1

EP 0 359 840 A1

## Verfahren zur Bestimmung der Anhängelast bei einer landwirtschaftlichen Maschine.

Die Erfindung betrifft ein Verfahren zur Bestimmung der Anhängelast bei einer landwirtschaftlichen Maschine wobei der Anhängelast der auf einen Kolben einer Kolben-Zylindereinrichtung einwirkende Druck eines Strömungsmittels aus einer Druckquelle entgegenwirkt.

Bei landwirtschaftlichen Maschinen wird Z.B. die Anhängelast mittels eines von der landwirtschaftlichen Maschine freikragend wegstehenden Gestänges getragen, wobei das Gestänge mindestens eine Kolben-Zylindereinrichtung aufweist. Der Druck des auf den Kolben der Kolben-Zylindereinrichtung einwirkenden Strömungsmittels ist im Gleichgewichtszustand mit der Gewichtskraft der Anhängelast, wobei das Produkt aus auf den Kolben einwirkendem Druck des Strömungsmittels mal Kolbenfläche gleich gross ist wie die Gewichtskraft der Anhängelast. Durch Messung des auf den Kolben der Kolben-Zylindereinrichtung einwirkenden Druckes ist es somit möglich, die Anhängelast zu bestimmen. Während der Fahrt der landwirtschaftlichen Maschine sind Erschütterungen oftmals nicht zu vermeiden, welche Beschleunigungen bzw. Verzögerungen der Anhängelast darstellen, wobei diese Beschleunigungen bzw. Verzögerungen durch entsprechend erhöhten bzw. erniedrigten Druck des Strömungsmittels kompensiert werden müssen, um den Gleichgewichtszustand aufrechtzuerhalten. Das bedeutet jedoch Oszillationen des Druckes des Strömungsmittels, so dass eine genaue Bestimmung der Anhängelast der fahrenden landwirtschaftlichen Maschine nur sehr bedingt möglich ist.

Deshalb liegt der Erfindung die Aufgabe zugrunde, ein Verfahren der eingangs genannten Art zu schaffen, mit welchem sich mit einfachen Mitteln eine Verbesserung der Messgenauigkeit bei der Bestimmung der Anhängelast bei einer landwirtschaftlichen Maschine erzielen lässt.

Diese Aufgabe wird erfindungsgemäss dadurch gelöst, dass die Anhängelast in eine obere Endstellung bewegt wird, dass anschliessend die Strömungsmittelverbindung zwischen der Druckquelle und dem Zylinder der Kolbenzylindereinrichtung unterbrochen und gleichzeitig eine eine Drosseleinrichtung und einen Sammelbehälter für das Strömungsmittel aufweisende zweite Leitung zwischen dem Zylinder und der Druckquelle geöffnet wird, so dass sich die Anhängelast infolge der Gravitation von der oberen ersten Endstellung zu einer unteren zweiten Endstellung bewegt, dass die Zeitdauer gemessen wird, die zwischen zwei vorbestimmten, voneinander beabstandeten Stellungen der Anhängelast vergeht, und dass aus der gemessenen Zeitdauer das zu dieser Zeitdauer umgekehrt proportionale Gewicht der Anhängelast bestimmt wird. Die Anhängelast wird dadurch in die erste obere Endstellung bewegt, dass der Kolben der Kolbenzylindereinrichtung mit einem entsprechend grossen Druck beaufschlagt wird, um die an der landwirtschaftlichen Zugmaschine befindliche Anhängelast hochzuheben. Anschliessend wird die Strömungsmittelverbindung zwischen der Druckquelle und dem Zylinder der Kolbenzylindereinrichtung unterbrochen und die zweite, zur ersten Leitung parallel vorgesehene Rohrleitung, in der eine Drosseleinrichtung und ein Sammelbehälter für das Strömungsmittel vorgesehen sind, geöffnet. Die zweite Rohrleitung muss nicht unbedingt gleichzeitig mit dem Schliessen der ersten Rohrleitung geöffnet werden, sondern es ist auch möglich, die zweite Rohrleitung erst zu einem späteren Zeitpunkt zu öffnen. In jedem Fall strömt nach dem Öffnen der zweiten Rohrleitung im Zylinder befindliches Strömungsmittel durch die Kraft der Anhängelast verursacht durch die Drosseleinrichtung zum Sammelbehälter und von dort in die Druckquelle zurück. Bei der Drosseleinrichtung handelt es sich bspw. um eine Drosselblende konstanten oder einstellbaren Drosselquerschnitts. Durch die Drosseleinrichtung ergibt sich in dieser zweiten Rohrleitung eine Dämpfung für das Strömungsmittel, so dass während der Fahrt der landwirtschaftlichen Maschine auftretende Erschütterungen gleichsam ausgeglättet werden, so dass auch während der Fahrt der landwirtschaftlichen Maschine eine vergleichsweise genaue Bestimmung des Gewichtes der Anhängelast möglich ist. Zu diesem Zweck wird die Zeitdauer gemessen, die zwischen zwei vorbestimmten, voneinander beabstandeten Stellungen der Anhängelast vergeht, wenn sich die Anhängelast infolge der Erdanziehung bei abgesperrter erster Rohrleitung und geöffneter zweiter Rohrleitung von der oberen ersten Endstellung in die untere zweite Endstellung bewegt. Bei den beiden vorbestimmten, voneinander beabstandeten Stellungen der Anhängelast kann es sich um diese erste obere und um die zweite untere Endstellung handeln. Als vorteilhaft hat es sich jedoch erwiesen, dass die Zeitdauer gemessen wird, die zwischen zwei definierten, zwischen der oberen ersten und der unteren zweiten Endstellung liegenden Zwischenstellungen der Anhängelast vergeht. Dadurch kann die Messgenauigkeit weiter verbessert werden. Die zwischen diesen beiden definierten Zwischenstellungen vergehende Zeitdauer ist zum Gewicht der Anhängelast umgekehrt proportional.

Als vorteilhaft hat es sich erwiesen, dass mit dem Taragewicht der Anhängelast eine erste Zeitdauer und dass vorher oder anschliessend mit einer definiereten Eichlast eine der Eichlast entsprechende zweite Zeitdauer gemessen wird. Diese erste und diese zweite Zeitdauer werden selbstverständlich ebenfalls zwischen den beiden oben erwähnten definierten Zwischenstellungen der Anhängelast gemessen. Durch die Bestimmung des Tatagewichtes der Anhängelast ist es bei nachfolgenden Gewichtsbestimmungen, bei denen es sich um Bruttogewichtsbestimmungen handelt, auf einfache Weise möglich, das Nettogewicht der Anhängelast zu bestimmen, d.h. zu berechnen.

Die Vorrichtung zur Bestimmung der Anhängelast bei einer landwirtschaftlichen Maschine mit einer Druckquelle für ein Strömungsmittel und mit einer Kolben-Zylindereinrichtung, deren Zylinder mittels einer Rohrleitung mit der Druckquelle und deren Kolben mit einem Gestänge zur Aufnahme der Anhängelast verbunden ist, ist dadurch gekennzeichnet, dass zwischen dem Zylinder der Kolbenzylindereinrichtung und der Druckquelle eine zweite Rohrleitung vorgesehen ist, die eine Drosseleinrichtung und einen Sammelbehälter für das Strömungsmittel aufweist, wobei der Sammelbehälter mit einem mit dem Zylinder verbundenen Einlass und mit einem mit der Druckquelle verbundenen Auslass ausgebildet ist, dass zur Bestimmung von zwei Stellungen des Gestänges bzw. des Kolbens der Kolbenzylindereinrichtung ein Positionssensor und zur Bestimmung der Zeitdauer zwischen den beiden Stellungen eine Zeitmesseinrichtung vorgesehen ist, und dass die erste und die zweite Rohrleitung zur wahlweisen Umschaltung von der ersten zur zweiten bzw. von der zweiten zur ersten Rohrleitung eine Umschalteinrichtung aufweist. Bei der Druckquelle für das Strömungsmittel handelt es sich bspw. um einen Kompressor. Die Drosseleinrichtung kann eine Drosselblende konstanten Öffnungsquerschnittes aufweisen. Es ist jedoch auch möglich, dass die Drosseleinrichtung eine Drosselblende mit einstellbarer Drosselöffnung aufweist. Bei dem Sammelbehälter kann es sich um einen sog. Strömungsmittelsumpf handeln. In einem solchen Sammelbehälter ergibt sich im Bedarfsfall automatisch eine gewisse Zwischenspeicherung für das Strömungsmittel. Die Umschalteinrichtung in den beiden Rohrleitungen kann als an sich bekannte Ventileinrichtung ausgebildet sein.

Wenn die beiden definierten, voneinander beabstandeten Stellungen an der Kolbenstange des Kolbens in Bezug auf den Zylinder der Kolbenzylindereinrichtung bestimmt werden, kann ein Positionssensor zur Anwendung gelangen, der als lineare Wegstreckenmesseinrichtung ausgebildet ist. Hierbei kann es sich um ein lineares elektrisches Widerstandspotentiometer oder um ein Drehpotentiometer handeln, das mit einer Zahnstange und einem Zahnritzel zusammenwirkt.

Als zweckmässig hat es sich erwiesen, dass der Positionssensor eine Drehwinkelmesseinrichtung aufweist. Dabei handelt es sich vorzugsweise um ein elektrisches Widerstandspotentiometer. Ein Positionssensor der zuletzt genannten Art kann unmittelbar an einem Gelenk des Gestänges der landwirtschaftlichen Maschine angeordnet sein, so dass der bauliche Aufwand minimal ist.

Die Zeitmesseinrichtung weist vorzugsweise einen elektronischen Ausgang auf, der mit einem Eingang eines Mikroprozessores verbunden ist, in dem das einer gemessenen Zeitdauer entsprechende Ausgangssignal in den entsprechenden Gewichtswert umgerechnet wird, und dass der Mikroprozessor einen Ausgang aufweist, an den eine Anzeigeeinrichtung zur Anzeige des berechneten Gewichtswertes angeschlossen ist. Sobald der Positionssensor die erste definierte Stellung des Gestänges registriert, wird die Zeitmesseinrichtung automatisch eingeschaltet. Wenn der Positionssensor zu einem späteren Zeitpunkt die zweite definierte Stellung, d.h. Zwischenstellung feststellt, wird die Zeitmesseinrichtung automatisch ausgeschaltet. Die Zeitmesseinrichtung funktioniert demnach als Stoppuhr, wobei das der Zeitdauer zwischen den beiden definierten Stellungen des Gestänges entsprechende elektronische Ausgangssignal, das am Ausgang der elektronischen Zeitmesseinrichtung ansteht, im an die Zeitmesseinrichtung angeschlossenen Mikroprozessor verarbeitet wird. Diese Verarbeitung ist einfach möglich, weil die Zeitdauer, die zwischen den beiden voneinander beabstandeten definierten Stellungen des Gestänges vergeht zu dem am Gestänge wirksamen Gewicht der Anhängelast umgekehrt proportional ist. Eine kleine gemessene Zeitdauer entspricht einer grossen Gewichtskraft und umgekehrt. Auf diese einfache Weise ist es somit möglich, das Gewicht einer Anhängelast der landwirtschaftlichen Maschine auch während der Fahrt zu bestimmen, wobei diese Gewichtsbestimmung infolge der Drosseleinrichtung und der durch die Drosseleinrichtung bewirkten Dämpfung vergleichsweise genau möglich ist. Erschütterungen der Anhängelast während der Fahrt der landwirtschaftlichen Maschine werden nämlich durch die Drosseleinrichtung geglättet, d.h. weggedämpft.

Weitere Einzelheiten, Merkmale und Vorteile ergeben sich aus der nachfolgenden Beschreibung eines in der Zeichnung schematisch dargestellten Ausführungsbeispieles der erfindungsgemässen Vorrichtung zur Durchführung des erfindungsgemässen Verfahrens zur Bestimmung des Gewichtes einer Anhängelast bei einer landwirtschaftlichen Maschine. Es zeigt:

Fig. 1 eine schematische Darstellung eines Abschnittes der landwirtschaftlichen Maschine,

Fig. 2 eine Diagrammdarstellung verschiedener Winkelstellungen eines Gestängeelementes der landwirtschaftlichen Maschine, und

Fig. 3 eine Diagrammdarstellung des Funktionszusammenhanges zwischen dem Gewicht G einer Anhängelast und der Zeitdauer t, die zwischen zwei vorbestimmten definierten Stellungen des in Fig. 2 schematisch angedeuteten Gestängeelementes vergeht.

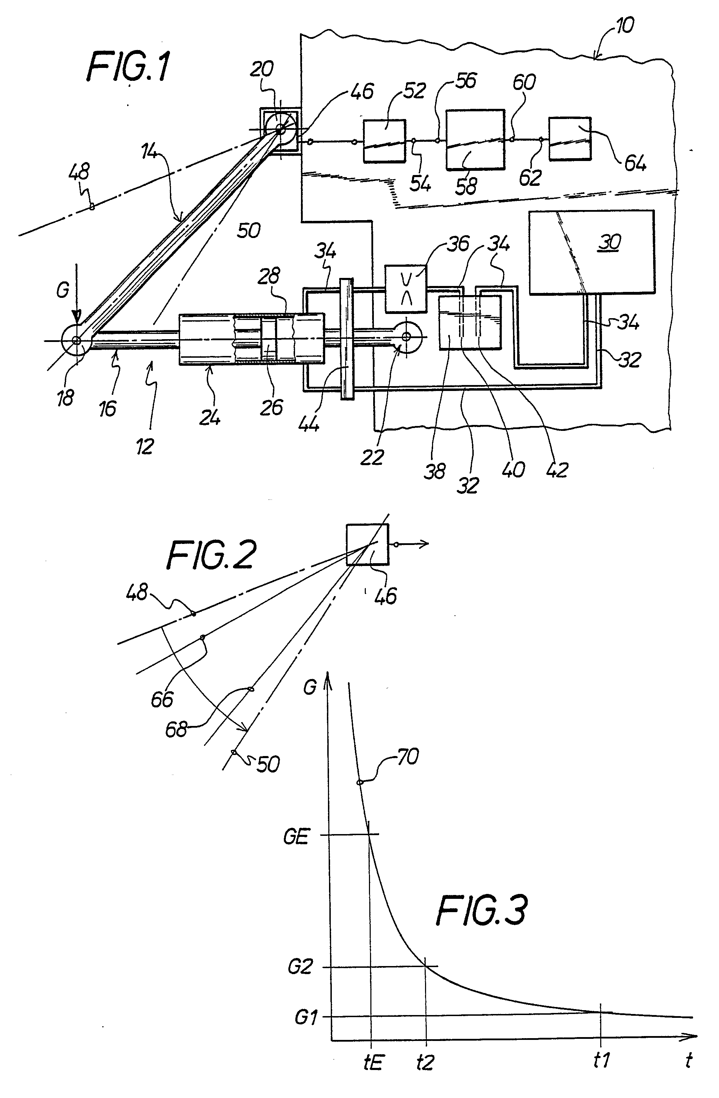

Fig. 1 zeigt einen Abschnitt einer schematisch angedeuteten landwirtschaftlichen Maschine 10, die ein Gestänge 12 aufweist, das von der landwirtschaftlichen Maschine 10 freikragend wegsteht. Das Gestänge 12 weist ein erstes Gestängeelement 14 und ein zweites Gestängeelement 16 auf. Die Gestängeelemente 14 und 16 sind mittels eines Gelenkes 18 miteinander gelenkig verbunden. Das erste Gestängeelement 14 ist mit seinem vom Gelenk 18 entfernten Endabschnitt mittels eines Gelenkes 20 an die landwirtschaftliche Maschine 10 angelenkt. Das zweite Gestängeelement 16 ist mittels eines Gelenkes 22 mit der landwirtschaftlichen Maschine 10 gelenkig verbunden. Das zweite Gestängeelement 16 ist mit einer Kolben-Zylindereinrichtung 24 versehen, wobei der Kolben 26 mit dem einen Teil des Gestängeelementes 16 und der Zylinder 28 mit dem anderen Teil des Gestängeelementes 16 fest verbunden ist. Die landwirtschaftliche Maschine 10 weist eine Druckquelle 30 auf, bei der es sich um einen an sich bekannten Kompressor handeln kann. Die Druckquelle 30 ist mit dem Zylinder 28 mittels einer ersten Rohrleitung 32 fluidisch verbunden. Parallel zur ersten Rohrleitung 32 ist zwischen dem Zylinder 28 und der Druckquelle 30 eine zweite Rohrleitung 34 vorgesehen, die mit einer Drosseleinrichtung 36 und mit einem Sammelbehälter 38 ausgestattet ist. Der Sammelbehälter 38 ist als sog. Sumpf mit einem Einlass 40 und mit einem Auslass 42 versehen. Der Einlass 40 ist an dem mit dem Zylinder 28 verbundenen Abschnitt der zweiten Rohrleitung 34 vorgesehen, und der Auslass 42 ist an dem mit der Druckquelle 30 verbundenen Abschnitt der zweiten Rohrleitung 34 vorgesehen. Eine Umschalteinrichtung 44 ist in den beiden Rohrleitungen 32 und 34 vorhanden, um entweder eine fluidische Verbindung zwischen der Druckquelle 30 und dem Zylinder 28 über die erste Rohrleitung 32 oder in der zweiten Schaltstellung der Umschalteinrichtung 44 über die zweite Rohrleitung 34 herzustellen.

Am Gelenk 20, mit dem das erste Gestängeelement 14 mit der landwirtschaftlichen Maschine 10 gelenkig verbunden ist, ist ein Positionssensor 46 vorgesehen, der als elektrisches Widerstandspotentiometer mit einem mit einer Potentiometerwelle verbundenen Rotor und mit einer mit dem Gehäuse des Potentiometers verbundenen Widerstandsbahn ausgebildet sein kann. Die Potentiometerwelle mit dem Rotor kann mit der landwirtschaftlichen Maschine 10 ortsfest verbunden sein und das Gehäuse mit der Widerstandsbahn ist dann mit dem ersten Gestängeelement 14 starr verbunden. Es ist selbstverständlich auch möglich, das Gehäuse mit der Widerstandsbahn an der landwirtschaftlichen Maschine 10 ortsfest vorzusehen und die Potentiometerwelle mit dem Rotor am ersten Gestängeelement 14 starr anzuordnen. In jedem Fall ergibt eine Winkeländerung des ersten Gestängeelementes 14 in Bezug auf das Gelenk 20 eine Änderung des elektrischen Widerstandes des Potentiometers. Anstelle eines elektrischen Widerstandpotentiometers kann der Positionssensor selbstverständlich auch als Drehkondensator, als veränderbare Induktivität oder als Element ausgebildet sein, das bei einer Winkeländerung eine entsprechende Änderung eines elektrischen Parameterwertes ergibt.

Mit dünnen strichpunktierten Linien 48 und 50 sind in Fig. 1 die obere Endstellung bzw. die untere Endstellung des Gestängeelementes 14 und damit der Anhängelast angedeutet. Die Anhängelast ist in Fig. I durch den mit G bezeichneten Pfeil verdeutlicht.

Mit dem Positionssensor 46 ist eine Zeitmesseinrichtung 52 verbunden, mit deren Hilfe auf elektronischem Wege eine Zeitmessung möglich ist. Die Zeitmesseinrichtung 52 weist einen Ausgang 54 auf, an dem ein der gemessenen Zeitdauer entsprechendes elektronisches Ausgangssignal ansteht. Der Ausgang 54 der Zeitmesseinrichtung 52 ist mit einem Eingang 56 eines Mikroprozessores 58 verbunden. Der Mikroprozessor 58 weist einen Ausgang 60 auf, der mit dem Eingang 62 einer Anzeigeeinrichtung 64 elektrisch leitend verbunden ist. Bei der Anzeigeeinrichtung kann es sich um ein Zeigerinstrument oder um eine digital anzeigende Einrichtung handeln. Die Anzeigeeinrichtung 64 ist üblicherweise in das Armaturenbrett der landwirtschaftlichen Maschine 10 integriert.

Die Wirkungsweise der in Fig. 1 dargestellten Einzelteile wird nachfolgend in Verbindung mit den Figuren 2 und 3 erläutert.

Zur Bestimmung des Gewichtes G einer Anhängelast wird der Kolben 26 der Kolbenzylindereinrichtung 24 über die erste Rohrleitung 32 mit einem Strömungsmittel aus der Druckquelle 30 beaufschlagt. Zu diesem Zweck wird die Umschalteinrichtung 44 in eine derartige Schaltposiiton gestellt, dass die erste Rohrleitung 32 geöffnet und gleichzeitig die zweite Rohrleitung 34 geschlossen ist. Dabei wird der Kolben 26 mit einem solchen Druck des Strömungsmittels beaufschlagt, dass das Produkt aus diesem Druck und der Kolbenfläche etwas grösser ist als die gegen den Kolben 26 wirkende Komponente der Gewichtskraft G. Das erste Gestängeelement 14 bewegt sich demnach in die obere Endstellung 48. Anschliessend wird mittels der Umschalteinrichtung 44 die erste Rohrleitung 32 abgesperrt und die zweite Rohrleitung 34 geöffnet, so dass das zwischen dem Kolben 26 und dem Zylinder 28 befindliche Strömungsmittel durch die Drosseleinrichtung 36 in den Sammelbehälter 38 fliessen kann. Das Gestängeelement 14 führt infolge der Gravitation eine Schwenkbewegung von der oberen ersten Endstellung 38 zur zweiten unteren Endstellung 50 durch. In Fig. 2 sind diese beiden Endstellungen wiederum durch strichpunktierte dünne Linien 48 und 50 angedeutet. Ausserdem sind in Fig. 2 zwei definierte Zwischenstellungen 66 und 68 durch dünne Linien angedeutet, wobei mit Hilfe des Positionssensors 46 die erste Zwischenstellung 46 des Gestängeelementes 14 und die zweite Zwischenstellung 68 des Gestängeelementes 14 bestimmt werden. Sobald das erste Gestängeelement 14 die erste Zwischenstellung 66 einnimmt, wird die als Stoppuhr funktionierende Zeitmesseinrichtung 52 (sh. Fig. 1) gestartet. Wenn das erste Gestängeelement 14 die zweite definierte Zwischenstellung 68 erreicht, was einem bestimmten elektrischen Ausgangssignal des Positionssensors 46 entspricht, wird die Zeitmesseinrichtung 52 gestoppt und die gestoppte Zeit bestimmt. Diese gestoppte Zeit liegt als elektrisches Ausgangssignal am Ausgang 54 der Zeitmesseinrichtung 52 an und wird automatisch in den Mikroprozessor 58 eingegeben. Im Mikroprozessor 58 ist ein Funktionszusammenhang $G = G(t)$ abgespeichert, der durch die Kurve 70 in Fig. 3 dargestellt ist. Wie aus dieser Figur ersichtlich ist, ist die Zeitdauer t, die zwischen den beiden definierten Zwischenstellungen 66 und 68 (sh. Fig. 2) vergeht, zur Gewichtskraft G umgekehrt proportional. Einer bestimmten mit Hilfe der Zeitmesseinrichtung 52 gemessenen Zeitdauer t entspricht ein Gewicht G. Zu Eichzwecken wird ohne zusätzliche Last das Taragewicht G1 des Gestänges 12 bestimmt. Zu diesem Zweck wird das Gestänge 12 ohne zusätzliche Last in die obere erste Endstellung 48 hochgehoben und von dort in die zweite untere Endstellung 50 infolge Gravitation abgesenkt. Zwischen den beiden Zwischenstellungen 66 und 68 wird die Zeitdauer t1 bestimmt. Anschliessend wir die gleiche Prozedur mit einer Eichlast GE durchgeführt und die Zeitdauer tE zwischen den beiden voneinander beabstandeten definierten Zwischenstellungen 66 und 68 bestimmt. Nachdem das Produkt aus Eichlast GE und zugehöriger Zeitdauer tE konstant ist, ist durch die Eichlast der Verlauf der Kurve 70 festgelegt, so dass durch die Bestimmung der Zeit t1 ein Rückschluss auf das Taragewicht G1 möglich ist. Durch die Bestimmung einer Zeitdauer t2 zwischen den Zwischenstellungen 66 und 68 ist somit eine Berechnung des zugehörigen Gewichtes G2 einer Anhängelast möglich. Aus der Differenz zwischen dem Gewicht G2 und dem Taragewicht G1 ist es möglich, das dem Gewicht G2 entsprechende Nettogewicht zu berechnen und mit Hilfe der Anzeigeeinrichtung 64 anzuzeigen.

**Ansprüche**

1. Verfahren zur Bestimmung des Gewichtes einer Anhängelast bei einer landwirtschaftlichen Maschine (10), wobei der Anhängelast der auf einen Kolben (26) einer Kolben-Zylindereinrichtung (24) einwirkende Druck eines Strömungsmittels aus einer Druckquelle (30) entgegenwirkt, **dadurch gekennzeichnet,** dass die Anhängelast in eine obere Endstellung (48) bewegt wird, dass anschliessend die Strömungsmittelverbindung zwischen der Druckquelle (30) und dem Zylinder (28) der Kolbenzylindereinrichtung (24) unterbrochen und gleichzeitig eine eine Drosseleinrichtung (36) und einen Sammelhälter (38) für das Strömungsmittel aufweisende zweite Leitung (34) zwischen dem Zylinder (28) und der Druckquelle (30) geöffnet wird, so dass sich die Anhängelast infolge der Gravitation von der oberen ersten Endstellung (48) zu einer unteren zweiten Endstellung (50) bewegt, dass die Zeitdauer (t) gemessen wird, die zwischen zwei vorbestimmten, voneinander beabstandeten Stellungen (66, 68) der Anhängelast während der Absenkbewegung vergeht, und dass aus der gemessenen Zeitdauer t das zu dieser Zeitdauer (t) umgekehrt proportionale Gewicht (G) der Anhängelast bestimmt wird.

2. Verfahren nach Anspruch 1, **dadurch gekennzeichnet,** dass die Zeitdauer (t) gemessen wird, die zwischen zwei definierten, zwischen der oberen ersten und der unteren zweiten Endstellung (48, 50) liegenden Zwischenstellungen (66, 68) der Anhängelast vergeht.

3. Verfahren nach Anspruch 1 oder 2, **dadurch gekennzeichnet,** dass mit dem Taragewicht (GI) der Anhängelast eine erste Zeitdauer (t1) und dass vorher oder anschliessend mit einer definierten Eichlast (GE) eine der Eichlast (GE) entsprechende zweite Zeitdauer (tE) gemessen wird.

4. Vorrichtung zur Bestimmung der Anhängelast bei einer landwirtschaftlichen Maschine (10), mit einer Druckquelle (30) für ein Strömungsmittel, und mit einer Kolben-Zylindereinrichtung (24), deren Zylinder (28) mittels einer Rohrleitung (32) mit der Druckquelle (30) und deren Kolben (26) mit einem Gestänge (16) zur Aufnahme der Anhängelast verbunden ist, **dadurch gekennzeichnet,** dass zwischen dem Zylinder (28) der Kolben-Zylindereinrichtung (24) und der Druckquelle (30) eine zweite Rohrleitung (34) vorgesehen ist, die eine Drosseleinrichtung (36) und einen Sammelbehälter (38) für das Strömungsmittel aufweist, wobei der Sammelbehälter (38) mit einem mit dem Zylinder (28) verbundenen Einlass (40) und mit einem mit der Druckquelle (30) verbundenen Auslass (42) ausgebildet ist, dass zur Bestimmung von zwei Stellungen (66, 68) des Gestänges (14) bzw. des Kolbens (26) der Kolben-Zylindereinrichtung (24) ein Positionssensor (46) und zur Bestimmung der Zeitdauer (t) zwischen den beiden Stellungen (66, 68) eine Zeitmesseinrichtung (52) vorgesehen ist, und dass die erste und die zweite Rohrleitung (32, 34) zur wahlwiesen Umschaltung von der ersten zur zweiten bzw. von der zweiten zur ersten Rohrleitung eine Umschalteinrichtung (44) aufweist.

    5. Vorrichtung nach Anspruch 4,
**dadurch gekennzeichnet,**
dass der Positionssensor (46) eine Drehwinkelmesseinrichtung aufweist.

    6. Vorrichtung nach Anspruch 4 oder 5,
**dadurch gekennzeichnet,**
dass der Positionssensor (46) ein elektrisches Widerstandspotentiometer ist.

    7. Vorrichtung nach wenigstens einem der Ansprüche 4 bis 6,
**dadurch gekennzeichnet,**
dass die Zeitmesseinrichtung (52) einen elektronischen Ausgang (54) aufweist, der mit einem Eingang (56) eines Mikroprozessors (58) verbunden ist, in dem das einer gemessenen Zeitdauer (e) entsprechende Ausgangssignal in den entsprechenden Gewichtswert (G) umgerechnet wird, und dass der Mikroprozessor (58) einen Ausgang (60) aufweist, an den eine Anzeigeeinrichtung (64) zur Anzeige des berechneten Gewichtswertes (G) angeschlossen ist.

FIG.1

FIG.2

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 312 006  (AB BOLINDER-MUNKTELL) <br> * Seite 1, Zeilen 1-14; Seite 3, Zeilen 14-18; Seite 4, Zeilen 12-22; Seite 5, Zeilen 9-20; Figur * <br> --- | 1,4 | G 01 G  19/16 <br> G 01 G  19/10 <br> G 01 G  5/04 <br> E 02 F  9/26 |
| A | FR-A-2 459 964  (H.Y. BERGERAT, MONNOYEUR S.A.) <br> * Seite 1, Zeile 35 - Seite 2, Zeile 4; Seite 2, Zeilen 18-27; Seite 3, Zeilen 32-41; Figuren 1,2 * <br> --- | 1,4 | |
| A | EP-A-0 110 399  (HITACHI CONSTRUCTION MACHINERY CO.) <br> * Zusammenfassung; Seite 4, Zeilen 3-15; Figur 5 * <br> --- | 1,4 | |
| A | EP-A-0 129 422  (J.C. SKEEN) <br> * Seite 1, Zeilen 2-5; Seite 2, Zeile 29 - Seite 3, Zeilen 3,19-37; Figur * <br> ----- | 1,4-6 | |
| | | | **RECHERCHIERTE SACHGEBIETE (Int. Cl.4)** |
| | | | G 01 G <br> E 02 F <br> B 66 C |

Der vorliegende Recherchenbericht wurde für alle Patentansprüche erstellt

| Recherchenort | Abschlußdatum der Recherche | Prüfer |
|---|---|---|
| ·DEN HAAG | 11-05-1989 | GANCI P.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

&: Mitglied der gleichen Patentfamilie, übereinstimmendes Dokument